(19) 

Europäisches
Patentamt
European
Patent Office
Office européen
des brevets

(11) **EP 4 682 573 A1**

(12) **EUROPEAN PATENT APPLICATION**

(43) Date of publication:
**21.01.2026 Bulletin 2026/04**

(21) Application number: **24188632.4**

(22) Date of filing: **15.07.2024**

(51) International Patent Classification (IPC):
**G01S 5/02** (2010.01)　　　　**G01S 5/14** (2006.01)

(52) Cooperative Patent Classification (CPC):
**G01S 5/0289; G01S 5/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NXP USA, Inc.**
**Austin TX 78735 (US)**

(72) Inventors:
 • **Barbaric, Tvrtko**
　**AG5656 Eindhoven (NL)**
 • **Dorris, Wesley Parker**
　**AG5656 Eindhoven (NL)**

(74) Representative: **Miles, John Richard**
**NXP Semiconductors**
**Intellectual Property Group**
**The Cattle Barn, Upper Ashfield Farm**
**Hoe Lane**
**Romsey, Hampshire SO51 9NJ (GB)**

(54) **A NETWORK CONTROL NODE AND METHOD**

(57)　Methods and apparatus for determining a position of a stationary network device using a non-stationary device are described. One method includes determining, by the network control node, at least one non-stationary device position within a target location by trilateration or multilateration from distance measurements between the non-stationary device and a first set of stationary devices having known positions (302). The method further includes determining by the network control node, a stationary network device position of a further stationary network device by trilateration or multilateration between the non-stationary device and a second set of stationary devices, the second set of stationary devices comprising a plurality of stationary devices having known positions and the further stationary network device (304). The first and second sets of devices may be overlapping, identical, or non-overlapping.

302 → DETERMINE NSD POSITION WITHIN TARGET LOCATION BY TRI-LATERATION OR MULTI-LATERATION BETWEEN NSD AND FIRST SET OF SDs INCLUDING SDs WITH KNOWN POSITIONS

300

304 → DETERMINE A SD POSITION OF A FURTHER SD DEVICE BY TRI-LATERATION OR MULTI-LATERATION BETWEEN NSD AND SECOND SET OF SDs INCLUDING SDs WITH KNOWN POSITIONS AND THE FURTHER SD DEVICE

**FIG. 3**

EP 4 682 573 A1

**Description**

FIELD

This disclosure relates to a method of determining a position of a stationary device of a network and/or a physical object using a non-stationary device and a network control node configured to determine the position of a stationary device of a network with the assistance of a non-stationary device.

BACKGROUND

An internet of things (IoT) system for building control and automation may be implemented as a number of devices (nodes) in a personal area network. Personal area networks (PAN) such as ZigBee, WiFi or Thread networks operating according to the IEEE 802.15.14 standard or IEEE 802.11 family of standards typically consist of a number of low power devices which may also be referred to as IoT devices. Such devices may be located throughout a building and perform different functions such as energy monitors, wireless light switches, and sensors. The functionality of the device may be predefined as part of the device specification as required for example by devices complying with the Matter specification.

For many applications of a wireless IoT device network in a building the IoT system requires knowledge of the location of IoT nodes within a building. This is done using a manual configuration of devices located in a building, predominantly by either dedicated numbering scheme (e.g., "3-1-27" for Building 3, Floor 1, Room 27) or descriptive labeling (e.g., "Living room").

SUMMARY

Aspects of the disclosure are defined in the accompanying claims. In a first aspect, there is provided a method of determining a position of a stationary device of a network, the method comprising: determining, by a network control node, at least one non-stationary device position of a non-stationary device within a target location by trilateration or multilateration between the non-stationary device and a first set of stationary devices comprising a plurality of stationary devices having known positions; and determining , by the network control node, a stationary device position of a further stationary device by trilateration or multilateration between the non-stationary device and a second set of stationary devices, the second set of stationary devices comprising a plurality of stationary devices having known positions and the further stationary device.

In some embodiments, the second set is a subset of the first set. In some embodiments, the second set is the same as the first set. In some embodiments, the second set is non-overlapping with the first set.

In a second aspect, there is provided a method of determining a position of a stationary device of a network, the method comprising: determining, by a network control node, a plurality of non-stationary device positions of a non-stationary device within a target location by trilateration or multilateration between the non-stationary device and a first set of stationary devices comprising a plurality of stationary devices having known positions; and determining, by the network control node, a stationary device position of a further stationary device by trilateration or multilateration between the further stationary device and the non-stationary network device.

In some embodiments, the method further comprises: determining the target location for the non-stationary device; determining when the non-stationary device is in the target location; wherein determining the at least one non-stationary device position further comprises: transmitting a ranging signal between the non-stationary device and the first set of stationary devices to determine a first distance value set of distance values between the non-stationary device and devices in the first set of stationary devices; and determining, the at least one non-stationary device position by trilateration or multilateration from the first distance value set and the known positions of the plurality of stationary devices in the first set of stationary devices.

In some embodiments, the further stationary device is associated with a current position value, the method further comprising: comparing, by the network control node, the stationary device position with the current position value; and replacing the current position value with the stationary device position if the stationary device position is different to the current position value.

In some embodiments, the first set of stationary devices have a position defined in a first co-ordinate system and the further stationary network device has a position defined in a second co-ordinate system, and determining the stationary device position further comprises determining the position of the further stationary device in the first co-ordinate system.

In some embodiments, the non-stationary device comprises a wireless transceiver configured to operate in a first ranging technology and a second ranging technology, and wherein each of the first set of stationary devices comprise transceivers configured to operate in the first ranging technology and each of the second set of stationary devices comprise a transceiver configured to operate in the second ranging technology.

In a third aspect, there is provided a method of determining a position of an object using a network, the method comprising: determining, by a network control node, at least one non-stationary device position of a non-stationary device within a target location by trilateration or multilateration between the non-stationary device and a first set of stationary devices comprising a plurality of stationary devices having known positions; and associating by the network control node at least one of a physical object and a further stationary network device with the at least one non-stationary device position.

In a fourth aspect, there is provided a network control node configured to be coupled to a network and further configured to: determine a non-stationary device position within a target location by trilateration or multilateration between the non-stationary device and a first set of stationary devices comprising a plurality of stationary devices having known positions; and determine a stationary network device position of a further stationary network device by trilateration or multilateration between the non-stationary device and a second set of stationary devices, the second set of stationary devices comprising the further stationary network device and a plurality of stationary devices having known positions.

In some embodiments, the second set is a subset of the first set. In some embodiments, the second set is the same as the first set. In some embodiments, the second set is non-overlapping with the first set.

In a fifth aspect, there is provided a network control node configured to be wirelessly coupled to a network and configured to: determine a plurality of non-stationary device positions within a target location by trilateration or multilateration between the non-stationary device and a first set of stationary devices for each of the plurality of non-stationary network device positions, the first set of stationary devices comprising a plurality of stationary devices having known positions; and determine a stationary network device position of a further stationary network device by trilateration or multilateration between the further stationary device and the non-stationary network device.

In some embodiments, the network control node is further configured to: determine the target location for the non-stationary device; determine when the non-stationary device is in the target location; transmit a ranging signal between the non-stationary device and the first set of stationary devices to determine a first distance value set of distance values between the non-stationary device and the plurality of stationary devices in the first set of stationary devices; and determine the at least one non-stationary device position by trilateration or multilateration from the first distance value set and the known positions of the plurality of stationary devices in the first set of stationary devices.

In some embodiments, the further stationary network device is associated with a current position value and the network control node is further configured to: compare the stationary network device position with the current position value; and replace the current position value with the stationary network device position if the stationary network device position is different to the current position value.

In some embodiments, the first set of stationary devices have a position defined in a first co-ordinate system and the further stationary network device has a position defined in a second co-ordinate system, and the network control node is further configured to determine the position of the further stationary device in the first co-ordinate system.

In some embodiments, the network control node comprises a wireless transceiver configured to operate in a first ranging technology and a second ranging technology, and wherein the first set of stationary devices comprise transceivers configured to operate in the first ranging technology and the second set of stationary devices comprises a transceiver configured to operate in the second ranging technology.

In a sixth aspect, there is provided a network control node configured to be wirelessly coupled to a network and further configured to: determine at least one non-stationary device position of a non-stationary device within a target location by trilateration or multilateration between the non-stationary device and a first set of stationary devices comprising a plurality of stationary devices having known positions; and associate at least one of a physical object and a further stationary network device with the at least one non-stationary device position.

BRIEF DESCRIPTION OF THE DRAWINGS

In the figures and description like reference numerals refer to like features. Embodiments are now described in detail, by way of example only, illustrated by the accompanying drawings in which:

Figure 1 shows a non-stationary device.

Figure 2 illustrates a network including stationary and non-stationary devices.

Figure 3 shows a method of determining a position of a stationary device or physical object using a non-stationary device according to an embodiment.

Figure 4 shows a method of determining a position of a stationary device using a non-stationary device according to an embodiment.

Figure 5 shows a method of determining a position of a stationary device using a non-stationary device according to an embodiment.

Figure 6 illustrates a method of determining a position of a stationary device according to an embodiment.

Figure 7 illustrates a method of determining a position of a stationary device using a non-stationary device according to an embodiment.

Figure 8 illustrates a method of localizing a stationary device using a non-stationary device according to an embodiment.

Figure 9 shows a network with an example sequence of a self-propelled non-stationary device moving towards a target location according to an embodiment.

Figure 10 shows a network including a non-stationary device according to an embodiment.

Figure 11 shows a network including a non-stationary device according to an embodiment.

Figure 12A and figure 12B, shows a network including a non-stationary device according to an embodiment.

Figure 13A, figure 13B, and figure 13C shows a network including a non-stationary device according to an embodiment.

Figure 14A, figure 14B shows a network including a non-stationary device according to an embodiment.

Figure 15A, figure 15B, figure 15C, figure 15D shows a network including a non-stationary device according to an embodiment. Figure 15E shows the merged location map tables.

Figure 16A, figure 16B shows a network including a non-stationary device according to an embodiment.

Figure 17A, figure 17B shows a network including a non-stationary device according to an embodiment.

Figure 18A, figure 18B, figure 18C and figure 18D shows a network including a non-stationary device according to an embodiment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

DETAILED DESCRIPTION OF EMBODIMENTS

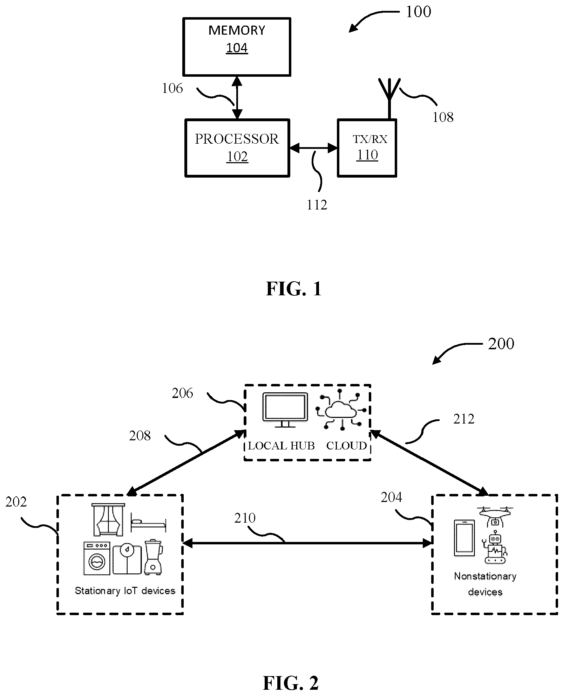

Figure 1 illustrates an example implementation of a non-stationary device (NSD) 100 including a processor 102 having a connection 106 to memory 104. The processor 102 has a further connection 112 to a transceiver 110 having an antenna 108. The non-stationary device 100 may be configured as a node within a wireless network depending on the software being executed by the processor 102. In some examples the non-stationary device 100 may have multiple transceivers supporting different radio standards. The transceivers may support standards such as Bluetooth Low Energy (BLE) which allow for distance measurements to be made between devices.

Figure 2 shows a network 200 including a non-stationary device (NSD) according to an embodiment. The network 200 includes a local network hub or in a cloud-based server 206. The network 200 may include a number of wireless network nodes 202 associated with devices which are intended to be placed in a fixed location in a building, which may be referred to as stationary devices (SD). Examples of stationary devices having wireless network transceivers include but are not limited to network enabled sensors such as carbon monoxide sensors, smoke detectors, other gas sensors temperature sensors, network-enabled light switches, light bulbs, and household appliances. The network 200 may include a number of wireless network nodes 202 associated with movable devices in a building, which may be referred to as non-stationary devices (NSD). Examples of non-stationary devices having wireless network transceivers include but are not limited to portable hand-held devices such as mobile phones, tablets, personal digital assistants, laptop computers, wearable devices such as smart watches, fitness trackers, medical monitors, smart glasses and self-propelled mobile devices such as robots with wheels or tracks and drones. The hub 206 may communicate to stationary devices via wired or wireless network connections 208. The hub 206 may communicate to non-stationary devices 212 via wireless network connections 212. The non-stationary devices 204 may communication to stationary devices 202 via wireless connections 210. The network 200 is configured to select participating devices for a particular distance measurement or measurements using ranging. A position map including the positions of at least some of the stationary devices(nodes)in the network 200 is determined for example using the method described in European Patent Application EP23190216.4. In addition, a location map of all or part of the building may be determined using the network 200, for example by using the methods and apparatus described in European Patent Application EP24177255.7.

The participating devices include at least one non-stationary device 204 and a number of stationary devices 202. The network 200 may include a system controller which may be implemented in the hub 206 by software or a combination of hardware and software. In other examples the system controller functionality may be implemented in whole or in part in one or more stationary devices 202 or one or more non-stationary devices 204. The system controller may also be referred to herein as a network control node or network control device. The network control node may be included in a system.

The network control node may configure stationary devices 202 and non-stationary devices 204 to perform measurement operations which may include but are not limited to signal presence and signal strength measurements of signals received/transmitted and distance measurements between the devices. When measurement conditions are met which may correspond to the non-stationary device 204 reaching a target location, the stationary devices 202 and nonstationary device 204 may perform a number of distance measurement operations. In some examples, the measurement operations may be carried out autonomously by either the non-stationary device 204 or stationary device 202. In other examples, the measurement operations may be performed by sending a sequence of measurement and/or movement instructions from the controller to the non-stationary device 204. In some examples the measurements may be controlled from the stationary device 202. In other examples, the measurements may be controlled from the non-stationary device 204.

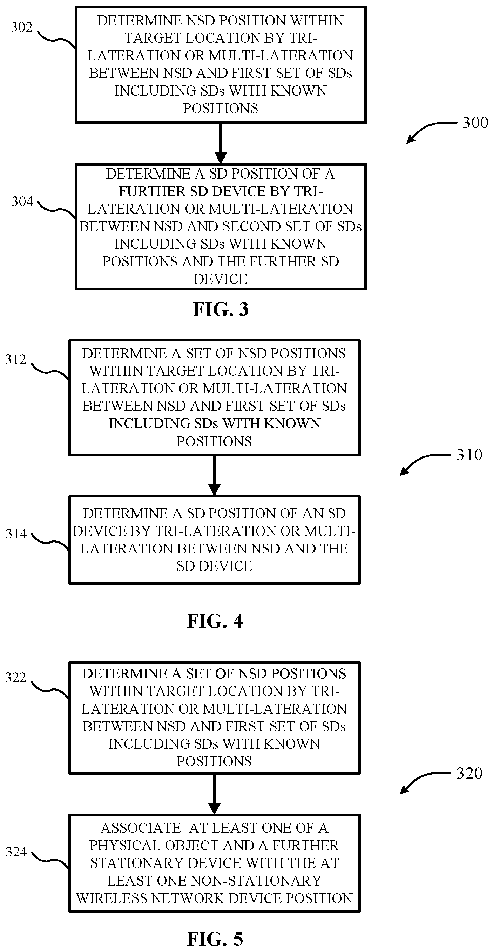

Figure 3 describes a method 300 of determining the position of a stationary device using a non-stationary device according to an embodiment. In step 302 at least one NSD position within a target location is determined by trilateration or multilateration using ranging measurements between the NSD and a first set of SDs including SDs with known pre-determined positions. The target location may be a specific region or area in a building or a specific location within a space, for example a wall, or the location of a stationary device in the network 200. The target location may be for example a region where the non-stationary device 204 is within a communication range of the first set of the stationary devices 202. In other examples, the target location may be a region where the NSD 204 is within wireless communication range of two different sets of SDs where each set of SDs includes SDs with known positions and also contains one or more SDs that are out of range of all SDs in the other set. In step 304, a position of a further SD in the second set of SDs which has an unknown position is determined by trilateration or multilateration between the NSD and SDs in the second set of SDs which have a predetermined position. In some examples the second set of SDs is the same as the first set of SDs. In some examples the second set of SDs contains a completely different set of SDs then the first set of SDs. In some examples, the second set of SDs may be a subset of the first set of SDs. The method 300 may allow the position of a SD device which could previously not be determined solely from SDs within communication range to be determined by supplementing the SDs by (temporarily) adding a NSD to the network to provide sufficient additional distance and position measurements to determine the position of an SD which otherwise would not be possible.

Figure 4 describes a method 310 of determining the position of a stationary device using a non-stationary device according to an embodiment. In step 312 a plurality of NSD positions within a target location is determined by trilateration or multilateration using ranging measurements between the NSD and a first set of SDs including SDs with known pre-determined positions. In step 314, a position of a further SD which may have an unknown position is determined by trilateration or multilateration between the NSD at each of the plurality of positions, and the further SD. The method 310 may allow the position of a SD device out of wireless communication range with the first set of SDs to be determined by temporarily adding a NSD to the network to provide sufficient additional distance and position measurements to determine the position of a further SD.

Figure 5 describes a method 320 of determining the position of a stationary device using a non-stationary device according to an embodiment. In step 322 one or more NSD positions within a target location is determined by trilateration or multilateration using ranging measurements between the NSD and a plurality of SDs with known pre-determined positions. The target location may include for example a position on a physical location such as a wall or a position adjacent to a SD without a wireless connection. In step 324, the position within the target location may be associated with a physical object and/or a further SD.

Methods 300,310,320 provide alternative methods of using a NSD temporarily included in a network to add additional positional information such as additional networked devices and/or physical locations to a positional map generated for example using methods described in European Patent Application EP23190216.4 and European Patent Application EP24177255.7. The methods 300, 310, 320 may be implemented by a network control node which may for example be a SD, NSD or hub as previously described.

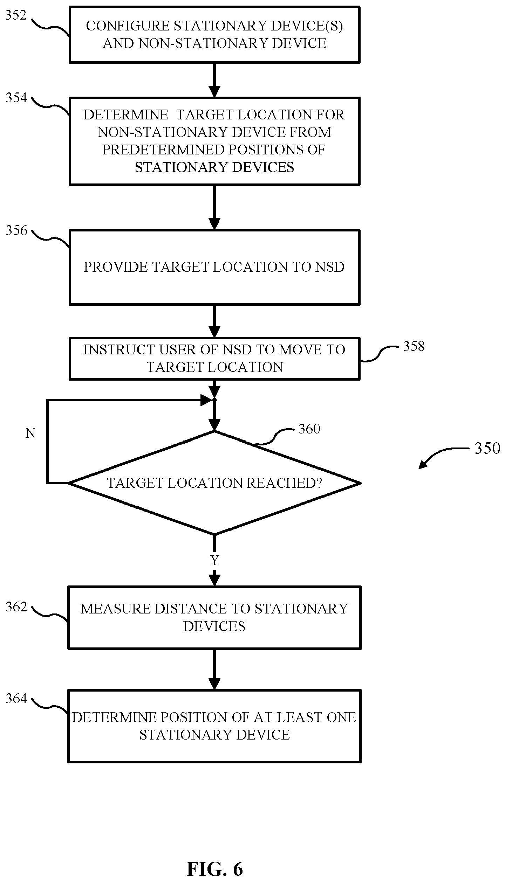

Figure 6 describes a method 350 of localizing a stationary device using a non-stationary device according to an embodiment. In step 352 the stationary and nonstationary devices 202, 204 are configured. In step 354, a target location may be determined for the non-stationary device from predetermined positions of the SDs 204. In step 356 the target location may be provided to the NSD 204. In step 358, a user of the NSD 204 is instructed to move the NSD to the target location. In step 360, the non-stationary device 204 may check to determine when the target location has been reached. If the target location has been reached, in step 362, one or more distance measurements may be made using ranging between the non-stationary device 204 and one or more of the stationary devices 202. In step 364 the position of at least one stationary device is determined from the distance measurements using trilateration or multilateration.

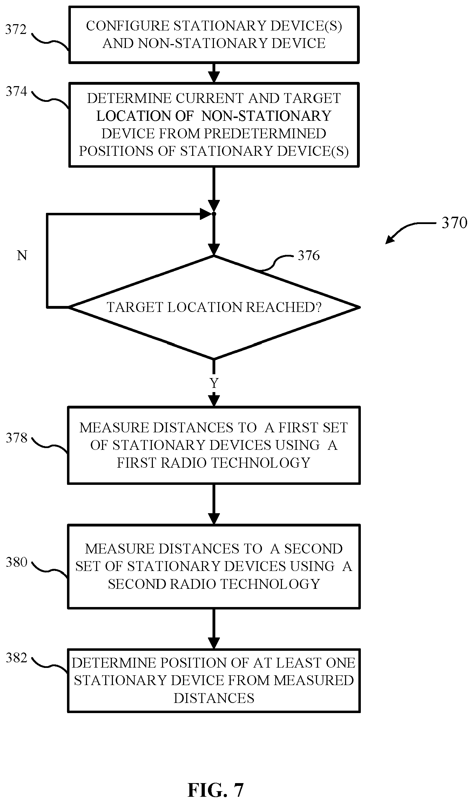

Figure 7 describes a method 370 of determining the position of a stationary device using a non-stationary device according to an embodiment. In step 372 the stationary and nonstationary devices are configured. In step 374, a current and target location may be determined for the NSD 204 from predetermined positions of the SDs 202. In some examples, the current location and the target location may be the same. In step 376, the non-stationary device 204 may check to determine when the target location has been reached. If the target location has been reached, in step 378, one or more distance measurements may be made using ranging between the non-stationary device 204 and one or more of the stationary devices 202 in a first radio technology for example BLE. In step 380, one or more distance measurements may be made using ranging between the non-stationary device 204 and one or more of the stationary devices 202 in a second radio technology. In step 382 the position of at least one stationary device may be determined from the distance measurements using trilateration or multilateration.

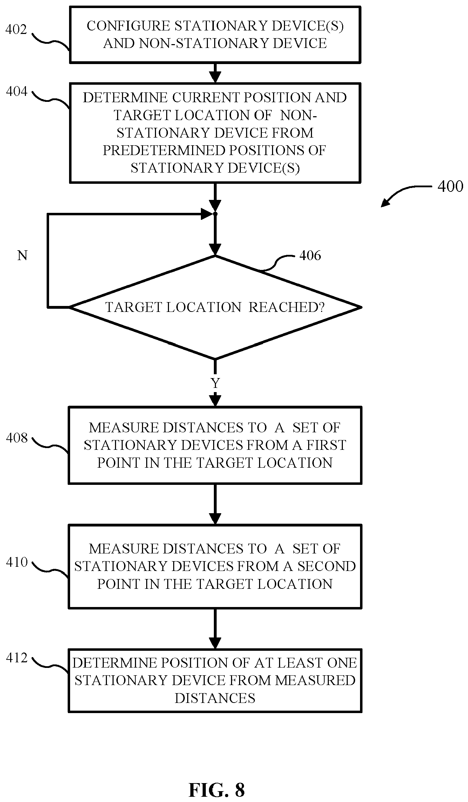

Figure 8 describes a method 400 of determining the position of a stationary device using a non-stationary device according to an embodiment. In step 402 the stationary and nonstationary devices are configured. In step 404, a current position and target location of the NSD 204 may be determined from predetermined positions of the SDs 202. In some examples, the current position may be in the target location. In step 406, the method may check to determine when the target location has been reached. If the target location has been reached, in step 408, one or more distance measurements may be made using ranging between the non-stationary device 204 and one or more of the stationary devices from a first point in the target location. In step 410, one or more distance measurements may be made using ranging between the non-stationary device 204 and one or more of the stationary devices 202 from a second point in the target location. In step 412 the position of at least one stationary device may be determined from the distance measurements using trilateration or multilateration.

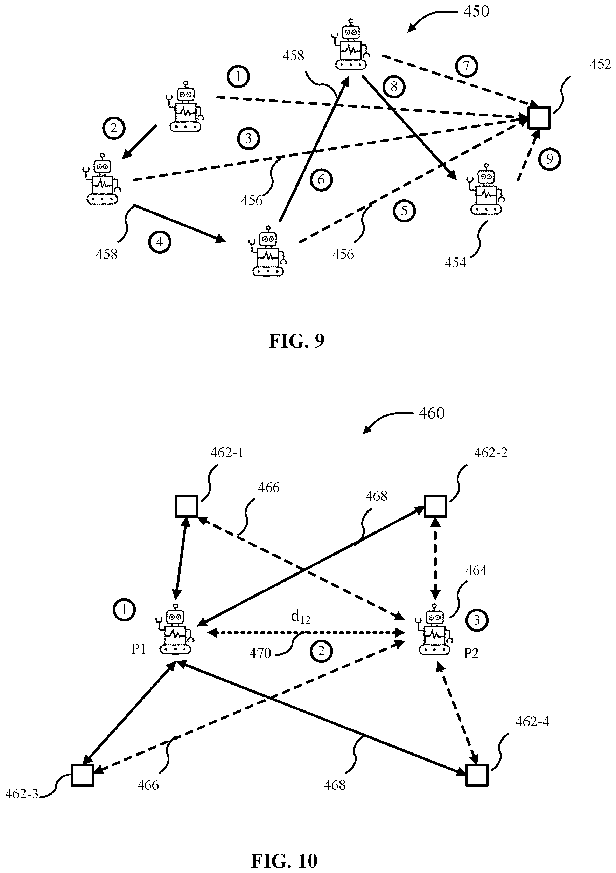

The methods 300, 320, 350, 370, 400 allow a nonstationary device to determine the position of a stationary device which to complement the existing map with additional positional data. Dependent on the type of non-stationary device, the NSD may either move to the target location defined by the controller or be manually positioned in the target location based on instructions provided to a user by the controller. Figure 9 shows a network 450 with an example sequence of a self-propelled non-stationary device 454 moving towards a target location which in this example is SD node 452. The self-propelled NSD 454 may alternate between measurements shown by the dashed lines 456 and movement shown by solid lines 458. The NSD 454 may move in a specified direction or move by a specified distance.

Figure 10 shows a network 460 where the NSDs can estimate the distance travelled, either self-measured with accelerometer or other means available or measured against other devices in the network by establishing the NSD position before and after the movement. The NSD 464 measures distance to participating SDs 462-1 to 462-4 by ranging via connection 468 from a first position $P_1$ in step 1, determines its position or sends to measurement data to a controlling node or controller (not shown) for determining the position. The NSD 464 travels in step 2 the unknown distance $d_{12}$ and afterwards determines its position from $P_2$ again in step 3 by ranging via connection 466. In this case the distance travelled as shown in Figure 9 is the length of the vector $\overrightarrow{P_1P_2}$ with

$$d_{12} = \sqrt{(x_2 - x_1)^2 + (y_2 - y_1)^2 + (z_2 - z_1)^2}$$

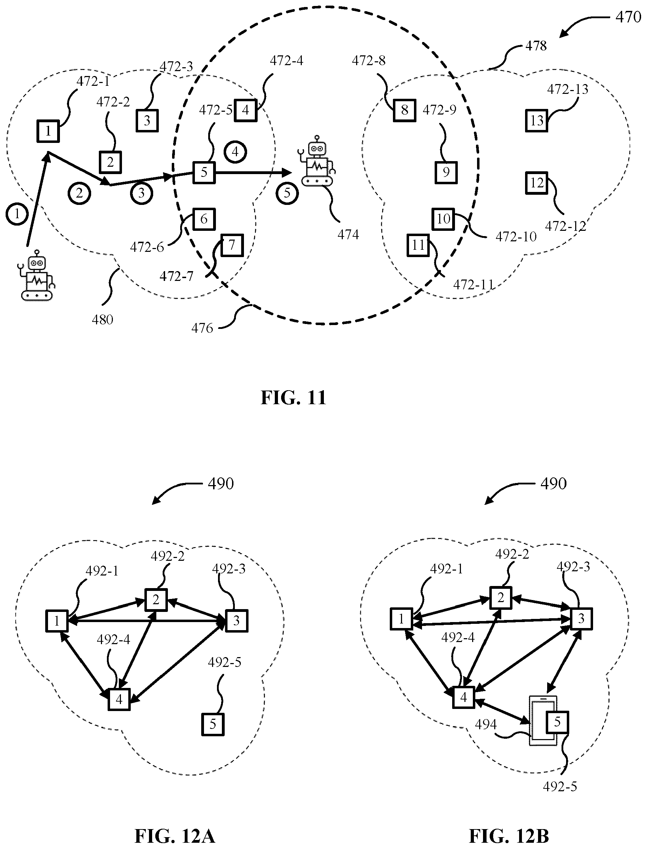

Figure 11 shows a network 470 having a first set of devices 480 consisting of SDs 472-1 to 472-7 and a second set of devices 478 consisting of SDs 472-8 to 472-13. A positional map of the first subset 480 and the second subset 478 may have been determined but the two maps cannot be merged for example because no SDs in the first subset 480 are in range of the second subset 478. The first subset 480 may have SD positions defined in a first co-ordinate system and the second subset 478 may have SD positions defined in a second co-ordinate system. The target location for this network 470 is determined as a region 476 where the NSD 474 is in communication range of SDs 472-4 to 472-11. The NSD 474 may move to a target location. In the example below, a controller (not shown) may determine the required route is defined via a sequence of nodes 472-1, 472-2, 472-4 and instruct the NSD how to reach the area of interest from the current position of the NSD 474. More specifically for network 470, the sequence is as follows:

1. Move towards 472-1.

2. When in specified distance from 472-1, move in direction from 472-1 to 472-2.

3. When in specified distance from 472-2, move towards 472-5.

4. When is specified distance from 472-5, move forward by defined distance.

5. Move away from 472-5 until area defined by 472-4 - 472-11 is reached.

Figures 12A and 12B illustrate a network 490 including a NSD 494 and a set of SDs 492-1 to 492-5. The position of SD node 492-5 has not been determined, which may be either because SD 492-5 has incompatible or no wireless transceivers, or it is not in range of a sufficient number of the other nodes 492-1 to 492-4. The position of SD 492-5 may be determined by method 320. The target location corresponds to a position close to node 492-5. The NSD 494 may be placed at the location of 492-5 illustrated in figure 11B which may be identified to the user of NSD 494 for example by a description of the device type. The position of NSD 494 relative to nodes 492-1 to 492-4 may be determined and consequently the position of node 492-5 using method 320.

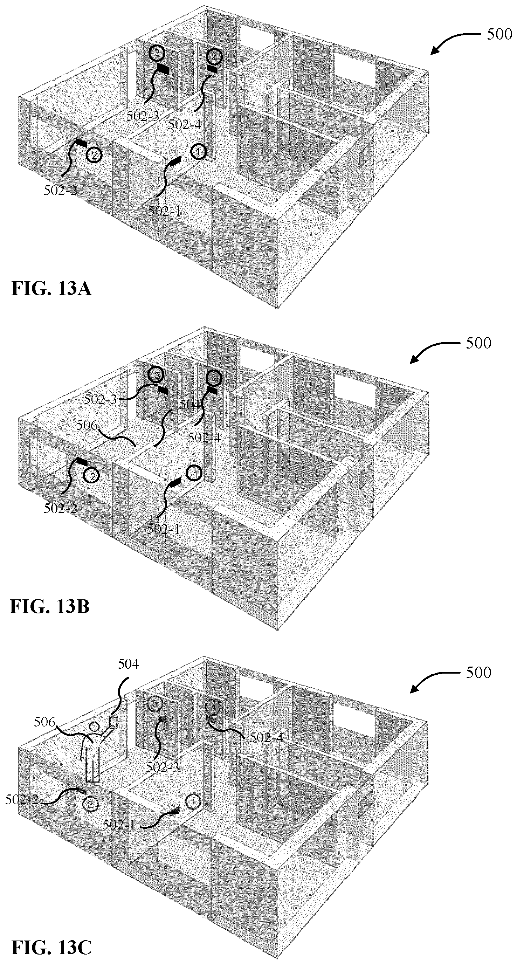

Figures 13A, 13B and 13C show an example network 500 including SDs 502-1 to 502-4 implementing method 320. The network nodes 502-1 and 502-4 have predetermined position information and partial space boundary information location. A user 506 may be guided to place the NSD 504 on a space boundary or any other physical object with position of interest for example a wall as illustrated in figures 12B and 12C. Additional measurements between the NSD and the SDs 502-1 to 502-4 for example using method 320 may be used to determine the location of the space boundary.

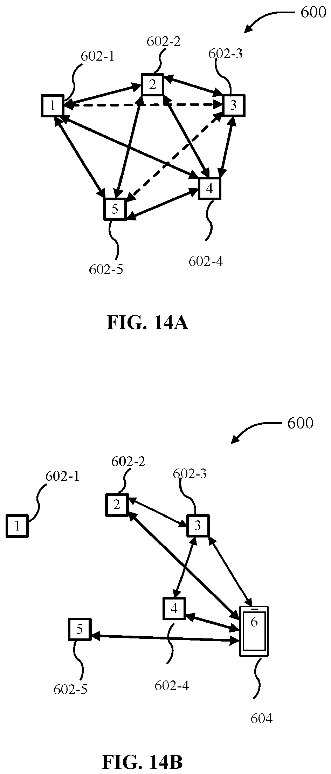

Figures 14A, 14B shows network 600 including SDs 602-1 to 602-5 which may use methods 300, 310 to determine an IoT device map. IoT device maps will spread over the installation space with varying density. As illustrated in figure 14A, SD 602-3 is out of range of SD 602-1, 602-5 and so has insufficient SDs in range to determine the position by trilateration. A nonstationary device 604 may be a positioned in a target location where both device 602-3 and three other devices 602-2, 602-4, 602-5 in 2D setup with established positions (or four other devices in 3D setup with established positions) are in reach for distance measurement. The method 300 may be used to calculate the position in 2D of the nonstationary device 604, by trilateration with devices, 602-2, 602-4, 602-5 and in a next step with knowledge of positions 602-2, 602-4, and 604, and knowledge of distances between 602-2 to 602-3, 602-4 to 602-3, and 604 to 602-3, calculate the position of device 602-3 relative to 602-2 and 602-4. This result may be integrated into the position map. After that, the distance information of position 604 can be discarded.

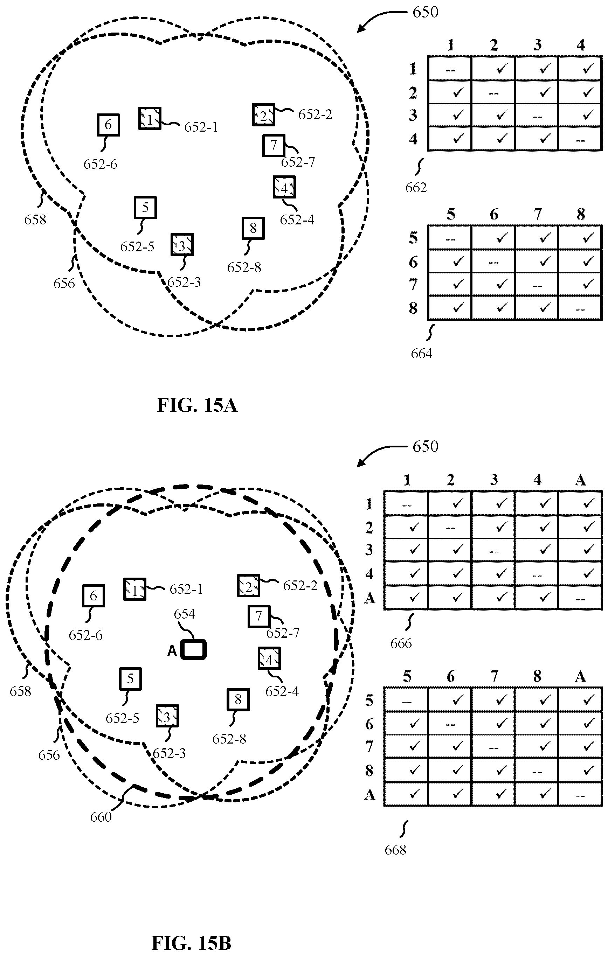

Figures 15A to 15D show a network 650 including SDs 652-1 to 652-8. Referring first to figure 15A, a first plurality of SDs 652-1 to 652-4 support a first wireless technology for ranging and a second plurality of SDs 652-5 to 652-8 support a second different wireless technology for ranging. The region 656 is covered by SDs 652-1 to 652-4 and region 658 is covered by SDs 652-5 to 652-8. The two subsets are mapped independently as shown in tables 662, 664 but the information cannot be combined because of the different radio technologies as indicated in the tables. Turning to figure 15B, NSD 654 is placed in position A within target location 660. Using one or more of methods 300, 310, 400 , the NSD may make a series of distance measurements to the two subsets of SDs indicated in tables 666, 668.

In order to align two 3D positional maps to each other, they must share a plane and a plane is defined by 3 points. The NSD 654 may move and measure distance to the same SDs from multiple locations is utilized to obtain distance information to both 3D maps from three points within range of both. To achieve this, the controller may configure the NSDs to move within target location 660 and take a further set of measurements for example using method 400.

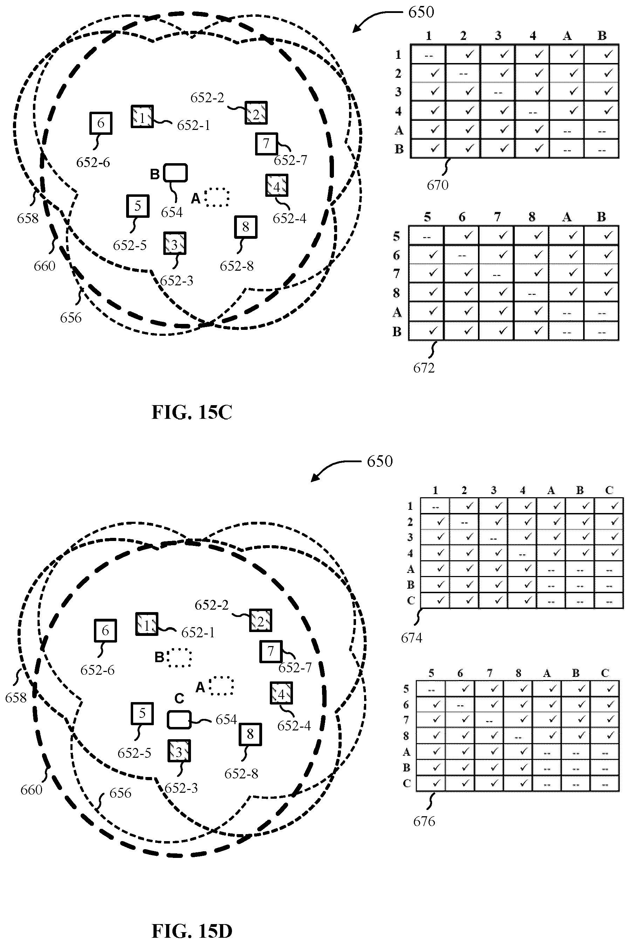

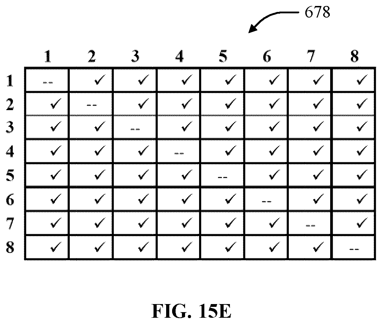

As shown in Figure 15C, adding a second point ('B') to already established first point (see Figure 6 on page 12), expands the distance table 670, 672, but the amount of data is not sufficient as the maps can still be rotated around the A-B axis. Adding a third measurement point ('C' in Figure 15D) establishes a shared plane between the two maps 674, 676 and the distance between all the points on both maps can be calculated and maps merged. Merging the two tables 674, 676, after removing the temporary points A, B and C, results in one unified map into a single map 678 of all SDs 652-1 to 652-8, illustrated in Figure 15E.

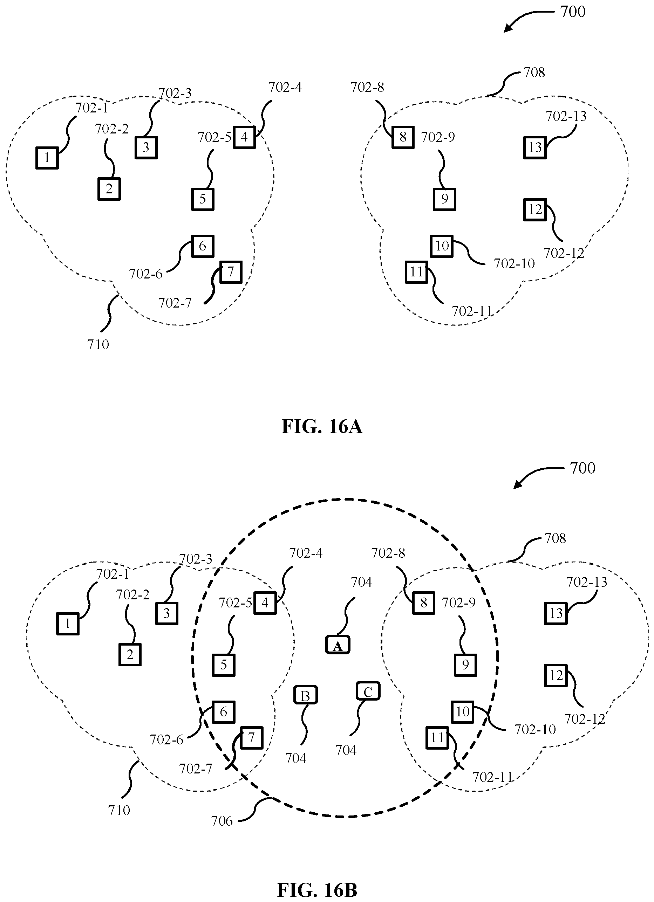

Figure 16A shows a network 700 having a first subset of SDs 702-1 to 702-7 in a first region 710 and a second subset of SDs 702-8 to 702-13 in a second region 708. In network 700 all devices in first region 710 are out of distance measurement range (or acceptable accuracy range, which is functionally equivalent) of all devices in the other segment region 708. Figure 16B shows the network 700 with an additional NSD 704 which is placed in the region 706 between the regions 708, 710 which allows the NSD 704 to make measurements to SDs in the first region 710 and the second region 708. By making measurements in three locations A, B, C the maps in 3D space may be constructed and finally merged similarly as described for network 600.

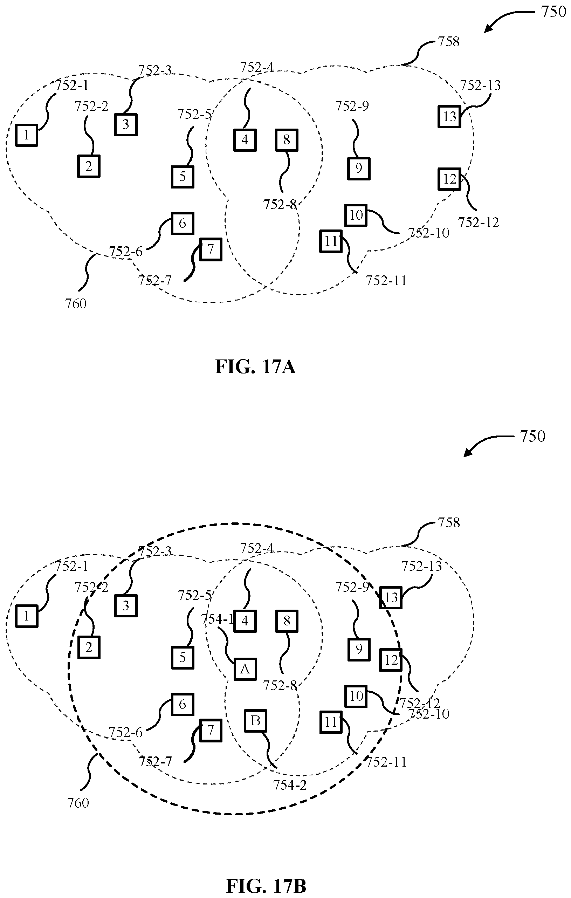

Figure 17A shows a network 750 having a first subset of SDs 752-1 to 752-8 and a second subset of SDs 752-4, 752-8 - 752-13. Devices 752-4, 752-8 are common to both subsets. In network 750 there is insufficient overlap between the wireless ranges of the two subsets to generate a single map of all SDs 752-1 to 752-13 resulting in two positional maps covering regions 760, 758. In this example the target location is in the overlap area of regions 760, 758. Figure 17B shows network 750 with NSD device 754-1 at position A and NSD device 754-2 at position B. The NSD-devices 754-1, 754-2 may make distance measurements using methods 300, 350. In other examples a single NSD device may be used first in location A and then location B for example using method 400. Again, similarly to the previously described methods, this position ambiguity is resolved by introducing NSDs in the area of interest and measuring their position from both SD subsets. In other examples, the number of NSD positions may vary.

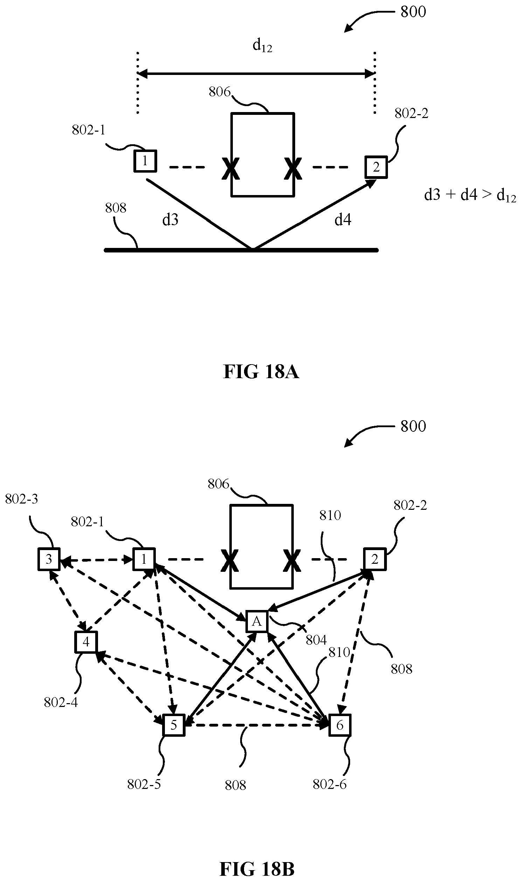

Figure 18A shows a network 800 which has an obstruction 806 preventing line of sight measurement between SDs 802-1 and 802-2. The blocking of RF signal can be resolved by additional measurement in line of sight. For network 800, the position of device 802-2 cannot be determined because of insufficient number of results towards other devices. All other devices are position determined. This is a special case of a device on a map boundary,

In Figure 18B, the NSD 804 at target location A enables line of sight measurement and the distance between #1 and #2, although still not measurable, can be calculated as length of vector P1 P2 once the coordinates are calculated with help of the NSD 804 position. Dashed lines 808 indicate ranging between SDs 802-1 to 802-6. Solid lines 810 indicate ranging connections between NSD 804 and SDs 802-1 to 802-6.

In some examples where the stationary devices 802-1 and 802-2 are known to be in the same height for examples via device properties, the movement of a floor-bound NSD 804 is in the parallel plane, so with reference to when NSD 804 is moving on a direct path between stationary devices 802-1 and 802-2 , a simplification in calculation can be made. The direct path can be established when any increase of d13 is equal to the decrease of d32' and vice versa.

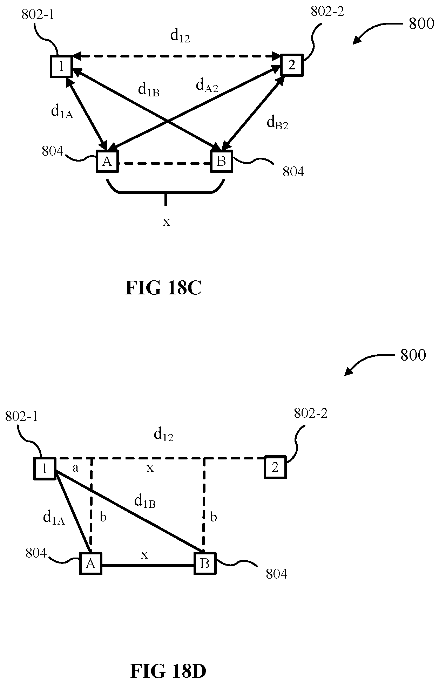

The nonstationary device 804 can function as multiple 'virtual points' in a coordinate system through minor repositioning of the device relative to nodes. As these minor movements can be tracked with sufficient accuracy through either accelerometer tracking (e.g., mobile phone) or motor control (e.g., robot vacuum), an arbitrary number of measurements can be taken against even an isolated node in a system to generate data that can be used for trilateration and mapping by a controller which may be a controller node. To measure distance between two SDs 802-1, 802-2 using a NSD 804, two measurements should be taken by the NSD 804 with both SDs 802-1, 802-2. The measurements must be taken at two positions along the line between the two SDs 802-1, 802-2. Figure 18C shows two SDs 802-1, 802-2. It also shows NSD 804 in two positions. The distance between A and B is defined as x. All distances $d_{xx}$ are measurable other than $d_{12}$, which is the distance to be derived.

Figure 18D shows two right triangles formed through the positions of one of the two SDs 802-1 and the NSD 804. Side 'b' is assumed to be equal for both triangles.

For $\angle 1A$, the triangle formed with hypotenuse $d_{1A}$, the remaining side is of length 'a'. For $\angle 1B$, the triangle formed with hypotenuse $d_{1B}$, the remaining side is of length 'a+x', where 'x' is the distance moved by the NSD 804 between positions A and B.

Lengths of $\angle 1A$ can be described by: $a^2 + b^2 = d_{1A}^2$

Lengths of $\angle 1B$ can be described by: $(a + x)^2 + b^2 = d_{1B}^2$

Which can be rewritten as: $a^2 + 2ax + x^2 + b^2 = d_{1B}^2$

This can be combined with $\angle 1B$s equation as:

$$2ax + x^2 + d_{13}^2 = d_{1B}^2$$

Solving for a provides the length of the side of $\angle 1A$ corresponding to one portion of $d_{12}$. The second portion of $d_{12}$ can be derived using the same operation as described above with lengths and triangles associated with SD 802-2. The calculated correct distance may be used to determine the correct position of node 802-2 which previously may have been incorrectly determined if reliant upon the incorrect distance $d_3+ d_4$ between node 802-1 and 802-2. A current position value of the SD may be replaced by the correctly determined SD position.

Embodiments integrate the capabilities of nonstationary devices into stationary IoT networks to localize stationary devices i.e., determine the position and or location of a stationary device to provide a more complete position/location map of an IoT network in a building determined by the methods described in European Patent Applications EP23190216.4. and EP24177255.7. In embodiments, a nonstationary device may determine the position of the NSD relative to SDs, move towards/away from a specified device, move in a specified direction, move by a specified distance, estimate distance travelled, move to/find a target location, detect when a target location is reached, instruct a user to perform desired actions and capture user input, measure distance on multiple ranging technologies from the same position.

Embodiments of the non-stationary device may allow a network to perform determination a position of stationary devices with no or incompatible ranging technology, determine physical objects and spaces not associated with an IoT device, determine a position of stationary devices on a map boundary, merge positional maps using incompatible ranging technologies, connect two detached map segments or segments with insufficient number of devices between them, and determine distance between two static IoT devices when that distance cannot be obtained by direct distance measurement.

Methods and apparatus for determining a position of a stationary network device using a non-stationary device are described. One method includes determining, by the network control node, at least one non-stationary device position within a target location by trilateration or multilateration from distance measurements between the non-stationary device and a first set of stationary devices having known positions. The method further includes determining by the network control node, a stationary network device position of a further stationary network device by trilateration or multilateration between the non-stationary device and a second set of stationary devices, the second set of stationary devices comprising a plurality of stationary devices having known positions and the further stationary network device. The first and second sets of devices may be overlapping, identical, or non-overlapping.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1. A method of determining a position of a stationary device of a network, the method comprising:

   determining, by a network control node, at least one non-stationary device position of a non-stationary device within a target location by trilateration or multilateration between the non-stationary device and a first set of stationary devices comprising a plurality of stationary devices having known positions; and

   determining , by the network control node, a stationary device position of a further stationary device by trilateration or multilateration between the non-stationary device and a second set of stationary devices, the second set of stationary devices comprising a plurality of stationary devices having known positions and the further stationary device.

2. The method of claim 1 wherein the second set is a subset of the first set.

3. The method of claim 1 wherein the second set is the same as the first set.

4. The method of claim 1 wherein the second set is non-overlapping with the first set.

5. A method of determining a position of a stationary device of a network, the method comprising:

    determining, by a network control node, a plurality of non-stationary device positions of a non-stationary device within a target location by trilateration or multilateration between the non-stationary device and a first set of stationary devices comprising a plurality of stationary devices having known positions; and
    determining, by the network control node, a stationary device position of a further stationary device by trilateration or multilateration between the further stationary device and the non-stationary device.

6. The method of any of claims 1 to 4, further comprising:

    determining the target location for the non-stationary device;
    determining when the non-stationary device is in the target location;
    wherein determining the at least one non-stationary device position further comprises: transmitting a ranging signal between the non-stationary device and the first set of stationary devices to determine a first distance value set of distance values between the non-stationary device and devices in the first set of stationary devices; and
    determining, the at least one non-stationary device position by trilateration or multilateration from the first distance value set and the known positions of the plurality of stationary devices in the first set of stationary devices.

7. The method of any preceding claim, wherein the further stationary device is associated with a current position value, the method further comprising:

    comparing, by the network control node, the stationary device position with the current position value; and
    replacing the current position value with the stationary device position if the stationary device position is different to the current position value.

8. The method of any preceding claim, wherein the first set of stationary devices have a position defined in a first co-ordinate system and the further stationary device has a position defined in a second co-ordinate system, and determining the stationary device position further comprises determining the position of the further stationary device in the first co-ordinate system.

9. The method of any preceding claim, wherein the non-stationary device comprises a wireless transceiver configured to operate in a first ranging technology and a second ranging technology, and wherein each of the first set of stationary wireless network devices comprise transceivers configured to operate in the first ranging technology and each of the second set of stationary devices comprise a transceiver configured to operate in the second ranging technology.

10. A method of determining a position of an object using a network, the method comprising:

    determining, by a network control node, at least one non-stationary device position of a non-stationary device within a target location by trilateration or multilateration between the non-stationary device and a first set of stationary devices comprising a plurality of stationary devices having known positions; and
    associating by the network control node at least one of a physical object and a further stationary network device with the at least one non-stationary device position.

11. A network control node configured to be coupled to a network and further configured to:

    determine a non-stationary device position within a target location by trilateration or multilateration between the non-stationary device and a first set of stationary devices comprising a plurality of stationary devices having known positions; and
    determine a stationary network device position of a further stationary network device by trilateration or multilateration between the non-stationary device and a second set of stationary devices, the second set of stationary devices comprising the further stationary network device and a plurality of stationary devices having known positions.

**12.** The network control node of claim 11, wherein the second set is a subset of the first set.

**13.** The network control node of claim 11, wherein the second set is the same as the first set.

**14.** The network control node of claim 11, the second set is non-overlapping with the first set.

**15.** A network control node configured to be wirelessly coupled to a network and configured to:

determine a plurality of non-stationary device positions within a target location by trilateration or multilateration between the non-stationary device and a first set of stationary devices for each of the plurality of non-stationary network device positions, the first set of stationary devices comprising a plurality of stationary devices having known positions; and
determine a stationary network device position of a further stationary network device by trilateration or multilateration between the further stationary device and the non-stationary network device.

**FIG. 1**

**FIG. 2**

302 DETERMINE NSD POSITION WITHIN TARGET LOCATION BY TRI-LATERATION OR MULTI-LATERATION BETWEEN NSD AND FIRST SET OF SDs INCLUDING SDs WITH KNOWN POSITIONS

300

304 DETERMINE A SD POSITION OF A **FURTHER SD DEVICE** BY TRI-LATERATION OR MULTI-LATERATION BETWEEN NSD AND SECOND SET OF SDs INCLUDING SDs WITH KNOWN POSITIONS AND THE FURTHER SD DEVICE

**FIG. 3**

312 DETERMINE A SET OF NSD POSITIONS WITHIN TARGET LOCATION BY TRI-LATERATION OR MULTI-LATERATION BETWEEN NSD AND FIRST SET OF SDs **INCLUDING SDs WITH KNOWN** POSITIONS

310

314 DETERMINE A SD POSITION OF AN SD DEVICE BY TRI-LATERATION OR MULTI-LATERATION BETWEEN NSD AND THE SD DEVICE

**FIG. 4**

322 DETERMINE A SET OF NSD POSITIONS WITHIN TARGET LOCATION BY TRI-LATERATION OR MULTI-LATERATION BETWEEN NSD AND FIRST SET OF SDs INCLUDING SDs WITH KNOWN POSITIONS

320

324 ASSOCIATE AT LEAST ONE OF A PHYSICAL OBJECT AND A FURTHER STATIONARY DEVICE WITH THE AT LEAST ONE NON-STATIONARY WIRELESS NETWORK DEVICE POSITION

**FIG. 5**

352 — CONFIGURE STATIONARY DEVICE(S) AND NON-STATIONARY DEVICE

354 — DETERMINE TARGET LOCATION FOR NON-STATIONARY DEVICE FROM PREDETERMINED POSITIONS OF STATIONARY DEVICES

356 — PROVIDE TARGET LOCATION TO NSD

358 — INSTRUCT USER OF NSD TO MOVE TO TARGET LOCATION

N

360 — TARGET LOCATION REACHED?

350

Y

362 — MEASURE DISTANCE TO STATIONARY DEVICES

364 — DETERMINE POSITION OF AT LEAST ONE STATIONARY DEVICE

**FIG. 6**

372 — CONFIGURE STATIONARY DEVICE(S) AND NON-STATIONARY DEVICE

374 — DETERMINE CURRENT AND TARGET **LOCATION OF NON-STATIONARY** DEVICE FROM PREDETERMINED POSITIONS OF STATIONARY DEVICE(S)

370

N

376 — TARGET LOCATION REACHED?

Y

378 — MEASURE DISTANCES TO A FIRST SET OF STATIONARY DEVICES USING A FIRST RADIO TECHNOLOGY

380 — MEASURE DISTANCES TO A SECOND SET OF STATIONARY DEVICES USING A SECOND RADIO TECHNOLOGY

382 — DETERMINE POSITION OF AT LEAST ONE STATIONARY DEVICE FROM MEASURED DISTANCES

**FIG. 7**

402 — CONFIGURE STATIONARY DEVICE(S) AND NON-STATIONARY DEVICE

404 — DETERMINE CURRENT POSITION AND TARGET LOCATION OF NON-STATIONARY DEVICE FROM PREDETERMINED POSITIONS OF STATIONARY DEVICE(S)

400

N

406 — TARGET LOCATION REACHED?

Y

408 — MEASURE DISTANCES TO A SET OF STATIONARY DEVICES FROM A FIRST POINT IN THE TARGET LOCATION

410 — MEASURE DISTANCES TO A SET OF STATIONARY DEVICES FROM A SECOND POINT IN THE TARGET LOCATION

412 — DETERMINE POSITION OF AT LEAST ONE STATIONARY DEVICE FROM MEASURED DISTANCES

**FIG. 8**

**FIG. 9**

**FIG. 10**

**FIG. 11**

**FIG. 12A**

**FIG. 12B**

500

502-3

502-4

2
502-2

1
502-1

**FIG. 13A**

500

502-3

504

506

502-4

2
502-2

1
502-1

**FIG. 13B**

504

500

506

502-4

502-3

502-2

2

1
502-1

**FIG. 13C**

FIG. 14A

FIG. 14B

|   | 1 | 2 | 3 | 4 |
|---|---|---|---|---|
| 1 | -- | ✓ | ✓ | ✓ |
| 2 | ✓ | -- | ✓ | ✓ |
| 3 | ✓ | ✓ | -- | ✓ |
| 4 | ✓ | ✓ | ✓ | -- |

662

|   | 5 | 6 | 7 | 8 |
|---|---|---|---|---|
| 5 | -- | ✓ | ✓ | ✓ |
| 6 | ✓ | -- | ✓ | ✓ |
| 7 | ✓ | ✓ | -- | ✓ |
| 8 | ✓ | ✓ | ✓ | -- |

664

**FIG. 15A**

|   | 1 | 2 | 3 | 4 | A |
|---|---|---|---|---|---|
| 1 | -- | ✓ | ✓ | ✓ | ✓ |
| 2 | ✓ | -- | ✓ | ✓ | ✓ |
| 3 | ✓ | ✓ | -- | ✓ | ✓ |
| 4 | ✓ | ✓ | ✓ | -- | ✓ |
| A | ✓ | ✓ | ✓ | ✓ | -- |

666

|   | 5 | 6 | 7 | 8 | A |
|---|---|---|---|---|---|
| 5 | -- | ✓ | ✓ | ✓ | ✓ |
| 6 | ✓ | -- | ✓ | ✓ | ✓ |
| 7 | ✓ | ✓ | -- | ✓ | ✓ |
| 8 | ✓ | ✓ | ✓ | -- | ✓ |
| A | ✓ | ✓ | ✓ | ✓ | -- |

668

**FIG. 15B**

FIG. 15C

FIG. 15D

678

|   | 1 | 2 | 3 | 4 | 5 | 6 | 7 | 8 |
|---|---|---|---|---|---|---|---|---|
| 1 | -- | ✓ | ✓ | ✓ | ✓ | ✓ | ✓ | ✓ |
| 2 | ✓ | -- | ✓ | ✓ | ✓ | ✓ | ✓ | ✓ |
| 3 | ✓ | ✓ | -- | ✓ | ✓ | ✓ | ✓ | ✓ |
| 4 | ✓ | ✓ | ✓ | -- | ✓ | ✓ | ✓ | ✓ |
| 5 | ✓ | ✓ | ✓ | ✓ | -- | ✓ | ✓ | ✓ |
| 6 | ✓ | ✓ | ✓ | ✓ | ✓ | -- | ✓ | ✓ |
| 7 | ✓ | ✓ | ✓ | ✓ | ✓ | ✓ | -- | ✓ |
| 8 | ✓ | ✓ | ✓ | ✓ | ✓ | ✓ | ✓ | -- |

**FIG. 15E**

**FIG. 16A**

**FIG. 16B**

**FIG. 17A**

**FIG. 17B**

800

$d_{12}$

806

802-1

802-2

1

2

808

d3

d4

$d3 + d4 > d_{12}$

**FIG 18A**

800

802-3

802-1

806

810

802-2

3

1

2

A

804

810

4

808

802-4

5

6

802-5

808

802-6

**FIG 18B**

**FIG 18C**

**FIG 18D**

Europäisches
Patentamt

European
Patent Office

Office européen
des brevets

# EUROPEAN SEARCH REPORT

**Application Number**

EP 24 18 8632

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 362 270 B2 (BOSCH GMBH ROBERT [DE]) 22 April 2008 (2008-04-22) * column 5, line 25 - column 7, line 28 * * figures 1-3 * * abstract * ----- | 1-15 | INV. G01S5/02 G01S5/14 |
| A | EP 1 617 601 A2 (UNIV TWENTE [NL]) 18 January 2006 (2006-01-18) * page 5, line 13 - page 8, line 14 * * figure 1 * * abstract * ----- | 1-15 | |
| A | WO 2022/234294 A1 (FORKBEARD TECH AS [NO]; WILSON TIMOTHY [GB]) 10 November 2022 (2022-11-10) * page 12, line 7 - page 18, line 31 * * figures 1-3 * * abstract * ----- | 1-15 | |
| | | | TECHNICAL FIELDS SEARCHED (IPC) G01S |

The present search report has been drawn up for all claims

| Place of search | Date of completion of the search | Examiner |
|---|---|---|
| Munich | 18 February 2025 | von Walter, Sven-Uwe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 24 18 8632

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2025

| Patent document cited in search report | | Publication date | Patent family member(s) | | Publication date |
|---|---|---|---|---|---|
| US 7362270 | B2 | 22-04-2008 | AT | E553623 T1 | 15-04-2012 |
| | | | EP | 1853082 A2 | 07-11-2007 |
| | | | US | 2007257839 A1 | 08-11-2007 |
| EP 1617601 | A2 | 18-01-2006 | NONE | | |
| WO 2022234294 | A1 | 10-11-2022 | AU | 2022269347 A1 | 14-12-2023 |
| | | | CA | 3215878 A1 | 10-11-2022 |
| | | | EP | 4334739 A1 | 13-03-2024 |
| | | | JP | 2024516864 A | 17-04-2024 |
| | | | KR | 20240018473 A | 13-02-2024 |
| | | | US | 2024248164 A1 | 25-07-2024 |
| | | | WO | 2022234294 A1 | 10-11-2022 |

EPO FORM P0459

For more details about this annex : see Official Journal of the European Patent Office, No. 12/82

## EP 4 682 573 A1

**Patent documents cited in the description**

- EP 23190216

- EP 24177255